# EUROPEAN PATENT SPECIFICATION

(11) **EP 2 369 233 B1**
(45) Date of publication and mention of the grant of the patent: **30.05.2018**
(21) Application number: 09833210.9
(22) Date of filing: 16.12.2009
(51) Int. Cl.: F23K 5/00, F23N 5/18, F23N 5/24, G01F 3/22

(54) **GAS SHUT-OFF DEVICE**
GASABSPERRVORRICHTUNG
DISPOSITIF DE COUPURE DE GAZ

(30) Priority: 19.12.2008 JP 2008323688
(43) Date of publication of application: 28.09.2011
(73) Proprietor: Panasonic Corporation, Kadoma-shi Osaka 571-8501 (JP)
(72) Inventor: UEKI, Kouichi, Chuo-ku, Osaka 540-6207 (JP); ASANO, Kazutaka, Chuo-ku, Osaka 540-6207 (JP); OOTANI, Takuhisa, Chuo-ku, Osaka 540-6207 (JP)
(74) Representative: Schwabe - Sandmair - Marx
(86) International application number: PCT/JP2009/006938
(87) International publication number: WO 2010/070903

(56) References cited:
- EP-A1- 2 177 828
- JP-A- 2002 107 198
- JP-A- 2005 257 310
- JP-A- 2008 134 125
- JP-A- 2008 180 707
- US-A- 4 881 948
- US-A1- 2008 115 840

## Description

### Technical Field

The present invention relates to a gas shut-off device, particularly, a gas shut-off device that prevents an erroneous shut-off due to a usage time limiting function even when an in-use flow rate is changed by a flow rate control of an appliance itself.

### Background Art

Hitherto, as this type of gas shut-off device, a gas shut-off device has been disclosed which includes: a flow rate measurement unit that outputs a flow rate signal corresponding to an amount of passed gas; an individual appliance estimation unit that, when the flow rate signal increases or decreases, estimates the increase or decrease in an individual appliance during use and outputs the increased or decreased estimated individual calculated flow rate of the appliance and the usage time; an individual flow rate registration unit that registers the flow rate of the individual appliance to be used in advance and outputs the registered individual flow rate and the usage time; an individual flow rate memory unit that stores the registered individual flow rate; an abnormal flow rate decision unit that outputs an individual abnormal signal when the increased or decreased estimated individual calculated flow rate of the appliance is not contained in the registered individual flow rate amounts of the individual flow rate memory unit and when the increased or decreased continuous usage time of the appliance continues for longer than a first predetermined time; a notification unit that receives the individual abnormal signal and provides a warning notification of the abnormality of the gas flow rate, or a shut-off unit that shuts off a gas path; and a constant individual flow rate registration unit that registers the estimated individual calculated flow rate of the individual flow rate estimation unit in the individual flow rate memory unit when the estimated individual calculated flow rate of the appliance of the individual appliance estimation unit is not contained in the registered individual flow rates of the individual flow rate memory unit and the usage time of the appliance of the individual appliance estimation unit is longer than a second predetermined time and is shorter than the first predetermined time (for example, see Patent Literature 1).

A configuration of the gas shut-off device of Patent Literature 1 will be briefly described using Fig. 3. Reference numeral 101 is a flow rate measurement unit which corresponds to a flow rate sensor attached to a gas meter. Reference numeral 102 is an individual appliance estimation unit that calculates an average flow rate for a certain measurement period (30 seconds) from flow rate signals of the flow rate sensor 1, estimates an increase or decrease in the individual flow rate during use based on an increase or decrease in the average flow rate, and outputs an increased or decreased estimation individual calculated flow rate Q of the appliance and the usage time. The individual appliance estimation unit 102 decides that, when the average flow rate increases, the increased gas appliance is used by that increase amount, decides that, when the average flow rate decreases, the decreased gas appliance is stopped by that decrease amount, and performs estimation in regard to the individual appliance during use. Reference numeral 103 is an individual flow rate registration unit which corresponds to a setting unit that sets the flow rate (Qi) of the individual appliance used at home in advance. Reference numeral 104 is an individual flow rate memory unit that stores the flow rate (Qi) of the individual appliance of the individual flow rate registration unit 103 and the flow rate of the constant individual flow rate registration unit 107 in order of Q1, Q2, Q3, ..., Qn. Reference numeral 105 is an abnormal flow rate decision unit that outputs an individual abnormal signal E if the estimated individual flow rate Q to be output from the individual appliance estimation unit 102 is not contained in [Q1, Q2, Q3, ..., Qn] of the individual flow rate memory unit 104 and the estimated individual flow rate Q continues for longer than the first predetermined time (10 minutes). Reference numeral 106 is a notification unit or a shut-off unit and includes an LCD or an LED that receives the individual abnormal signal E and provides a warning notification thereof, or a shut-off valve that shuts off a gas path. Reference numeral 107 is a constant individual flow rate registration unit that outputs the estimated individual flow rate Q to the individual flow rate memory unit 104 when the estimated individual calculated flow rate Q to be output from the individual appliance estimation unit 102 is greater than or equal to the second predetermined time (three minutes) and within the first predetermined time (ten minutes).

Next, an operation of the configuration of the example of the related art will be described. The average flow rate is calculated based on the flow rate signal of the flow rate measurement unit 101. A changed flow rate to the average flow rate from the previous average flow rate is obtained, and it is determined whether or not the change is a change of an increase or a change of a decrease. The estimated individual calculated flow rate Q is obtained by the respective processing. It is determined whether the estimated individual calculated flow rate Q, which is newly obtained as a consequence of the increase or decrease processing, is contained in the individual flow rate memory unit 104 and is being used for the first predetermined time (for 10 minutes). When the flow rate is not contained and usage is for longer than 10 minutes, the notification unit or the shut-off unit 106 is operated, and when the flow rate is not contained or usage is not for longer than 10 minutes, it is determined whether the flow rate is a non-registered flow rate, is being used for longer than 3 minutes or the usage time is shorter than or equal to 10 minutes, respectively. If the estimated individual calculated flow rate Q satisfies all conditions, the constant individual flow rate registration unit 107 performs the processing of the registration in the individual flow rate memory unit 104.

Now, when, due to the simultaneous use of a plurality of appliances, there is an increase in average flow rate termed Qt (for example, Q2 + Q3) and the usage time is 7 minutes, that is, the average flow rate decreases after 7 minutes, the estimated individual flow rate Qt is output by the individual appliance estimation unit 102. The estimated individual flow rate Qt is registered in the individual flow rate memory unit 104 by deciding that the usage time is longer than or equal to 3 minutes and shorter than or equal to 10 minutes using the constant individual flow rate registration unit 107. Thereafter, since the flow rate is registered in the individual flow rate memory unit 104, even if the flow rate is obtained for longer than 10 minutes, the shut-off is not performed. That is, it is possible to reduce an erroneous shut-off due to a large number of gas appliances in a case in which the appliances are started concurrently. Furthermore, when there is a new individual flow rate Qk (longer than 3 minutes and shorter than 10 minutes) due to the purchase and exchange of an appliance or the like, the estimated individual flow rate Qk is output by the individual appliance estimation unit 102. The estimated individual flow rate Qk is registered in the individual flow rate memory unit 104 by deciding that the usage time is longer than or equal to 3 minutes and shorter than or equal to 10 minutes by the constant individual flow rate registration unit 107.

Hereinafter, since the flow rate is registered in the individual flow rate memory unit 104, even if the flow rate is obtained for longer than 10 minutes, the shut-off is not performed. The individual appliances to be used in the respective homes are newly stored, so an accident caused by gas leakage due to a flow rate other than the individual appliances can be prevented in advance, and it is possible to prevent an erroneous shut-off due to the concurrent starting of the appliances, the purchase and exchange of an appliance or the like. Another configuration of a gas shut-off device is disclosed in Patent Literature 2, which represents prior art in the sense of Article 54(3) EPC.

### Citation List

### Patent Literature

Patent Literature 1: JP-A-7-44239
Patent Literature 2: EP 2 177 828 A1

### Summary of Invention

### Technical Problem

However, in the configuration of the related art, there is provided a function of preventing erroneous shut-off by shutting off the gas path when a flow rate which is not registered in the individual flow rate memory unit is newly detected, or by newly registering the flow rate as a registered individual flow rate. However, when the individual appliance estimation unit performs estimation regarding the individual appliance, in a case where the use of the appliance registered as the registered individual flow rate is stopped in a state in which the flow rate has been gradually changed within a normal range by the flow rate control of the appliance itself, there is a case where the flow rate becomes a value different from the individual flow rate at the time of the registration, and when deleting the registered individual flow rate, the wrong registered individual flow rate is erroneously deleted. In this case, when a small registered individual flow rate is deleted and a large one remains, the limitation time enabling the continuous use of the appliance is reduced, the gas shut-off valve is operated for slightly shorter than expected and the supply of the gas is stopped. In contrast, when a large registered individual flow rate is deleted and a small one remains, the continuous use limitation time is extended, and the appliance having the large usage flow rate is used. Thus, there is a problem in terms of safety.

For example, there is a case where, since a hot water heater is maintained at a setting temperature when using a shower or the like, the gas flow rate is controlled depending on the temperature deviation and the combustion amount is variable, or there is a case where, since a fan heater or the like is maintained at a fixed temperature, the gas flow rate is controlled and the combustion amount is variable. In such cases, there is a case where the estimated individual calculated flow rate, which is obtained by the individual appliance estimation unit and is registered in the individual flow rate registration unit at the time of the start of appliance use, is different from the initial estimated individual calculated flow rate when the gas flow rate gradually decreases over time due to the combustion amount control depending on the load fluctuation. Generally, when the other appliance is stopped or a large flow rate change is generated during the use of a plurality of appliances, the estimated individual calculated flow rate of the individual flow rate registration unit is registered based on the change amount, but when being gradually changed at a small change rate like the above-mentioned type of use, the registration processing of the estimation individual calculated flow rate is not performed. When performing the registration processing of the estimation individual calculated flow rate at the timing of the appliance use stop or the appliance use addition, there is a case where the total value of an actual flow rate, which is reduced by the combustion amount control, differs from the registered flow rate. In this case, by monitoring in a state in which the total value of the registered flow rate is greater than the actual flow rate, the appliance continuous use limitation time is slightly shifted and the erroneous shut-off is prevented. That is, there is a problem in that, since the monitoring different from the actual use flow rate is performed, the erroneous shut-off cannot be prevented.

The present invention has been made to solve the above-mentioned problems, and an object thereof is to provide a gas shut-off device that does not have erroneous shut-off and that has high safety, by correcting the registered individual flow rate based on the differential data in a case where the registered individual flow rate after deleting a predetermined registered individual flow rate is compared to the average flow rate value to be obtained by the flow rate calculation unit and a difference which is greater than a predetermined value appears when detecting the appliance use stop, even in a state in which the gas flow rate is gradually changed at a small change rate, thereby making the registered individual flow rate approximate to the actual use flow rate.

### Solution to Problem

In order to solve the problem mentioned above, a gas shut-off device according to an aspect of the invention includes: a flow rate detection unit that measures a flow rate; a flow rate calculation unit that calculates values of instant flow rates from a detection value; an average flow rate calculation unit that obtains an average flow rate from the obtained instant flow rates; a flow rate change decision unit that decides the presence or absence of a change in the flow rate based on the obtained average flow rate; a flow rate storage unit that stores a value of the obtained average flow rate; an increase flow rate registration unit that registers an amount of the flow rate change at the time of increase change decision by the flow rate change decision unit; a decrease flow rate re-registration unit that reduces the registered flow rate near an amount of the flow rate change at the time of decrease change decision by the flow rate change decision unit, and re-registers and replaces it with a value of the average flow rate obtained by the average flow rate calculation unit after the reduction of the registered flow rate; a monitoring value memory unit that is configured to store a decision value for monitoring the usage states of the gas appliances; an abnormality decision unit that decides whether or not an abnormality exists from the registered flow rate of the increase flow rate registration unit and the decision value of the monitoring value memory unit; and a shut-off unit that shuts off the supply of gas when the abnormality established by the abnormality decision unit exists.

According to the aspect of the invention, when an appliance is used and its appliance flow rate is being registered, after a minute flow rate change which the flow rate change decision unit cannot decide as the flow rate change continues, a flow rate change is determined when the use of a certain appliance is stopped and the flow rate is deleted by the flow rate registration unit. In this case, if the registration number of the flow rates is one, the flow rate registration value is replaced and re-registered by the obtained average flow rate. Thus, it becomes possible to monitor by a usage time corresponding to the actual flow rate of the appliances. Accordingly, it is possible to avoid a case where the flow rate which is minutely changed is re-registered erroneously by considering as the appliance, and the usage time of the flow rate is monitored, and the usage time is shut off early, thereby increasing the number of unnecessary mobilization times of a gas provider or a case where an appliance such as a heater, which can be naturally used for a long time, is stopped in a short time, thereby having an adverse effect on convenience. Moreover, there is an effect in which the reliability and the safety are high.

### Advantageous Effects of Invention

In the gas shut-off device of the present invention, when a plurality of appliances are being used and a plurality of appliance flow rates are registered, if any appliance is decided to be stopped in use by the flow rate change decision unit, and the corresponding flow rate is deleted by the flow rate registration unit, then the usage appliance is single, the flow rate registration value is replaced and re-registered by the obtained average flow rate. Thus, it becomes possible to monitor by the usage time corresponding to the actual flow rate of the appliances. Accordingly, it is possible to avoid a case where the flow rate which is minutely changed is re-registered erroneously by considering as the appliance, and the usage time of the flow rate is monitored, and the usage time is shut off early, thereby increasing the number of unnecessary mobilization times of a gas provider or a case where an appliance such as a heater, which can be naturally used for a long time, is stopped in a short time, thereby having an adverse effect on convenience. Moreover, there is an effect in which reliability and safety are high.

### Brief Description of Drawings

Fig. 1 is a schematic diagram that shows an installation form of a gas shut-off device and gas appliances in a first embodiment of the present invention.
Fig. 2 is a control block diagram of the gas shut-off device.

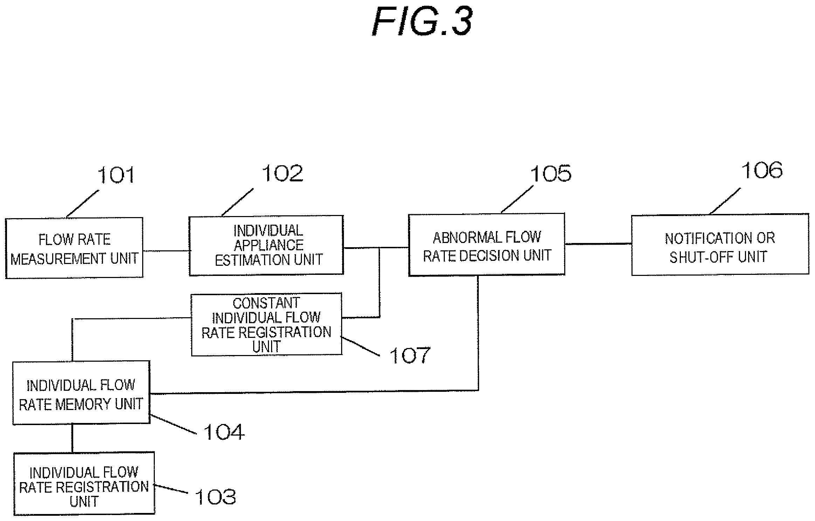

Fig. 3 is a control block diagram of a gas shut-off device of the related art.

### Description of Embodiments

In order to achieve the object as mentioned above, there is provided a gas shut-off device according to the invention that monitors usage states of a plurality of gas appliances and shuts off the supply of gas at the time of abnormality occurrence, the gas shut-off device including: a flow rate detection unit that is configured to measure a flow rate; a flow rate calculation unit that is configured to calculate values of instant flow rates from a detection value of the flow rate detection unit; an average flow rate calculation unit that is configured to obtain an average flow rate from the instant flow rates obtained by the flow rate calculation unit; a flow rate storage unit that is configured to store a value of the average flow rate obtained by the average flow rate calculation unit; a flow rate change decision unit that is configured to decide that a change in the flow rate exists when the change flow rate is greater than a predetermined change value based on the average flow rate obtained by the average flow rate calculation unit and a storing value of the flow rate storage unit; an increase flow rate registration unit that is configured to register an amount of the flow rate change at the time of increase change decision by the flow rate change decision unit; a decrease flow rate re-registration unit that is configured to reduce the registered flow rate near an amount of the flow rate change at the time of decrease change decision by the flow rate change decision unit, and re-register and replace it with a value of the average flow rate obtained by the average flow rate calculation unit after the reduction of the registered flow rate; a monitoring value memory unit that is configured to store a decision value for monitoring the usage states of the appliances; an abnormality decision unit that is configured to decide whether or not an abnormality exists from the registered flow rate of the flow rate registration unit and the decision value of the monitoring value memory unit; and a shut-off unit that is configured to shut off the supply of gas when the abnormality established by the abnormality decision unit exists.

The appliance use is detected by the flow rate detection unit and is converted into the instant flow rate by the flow rate calculation unit to obtain the average flow rate. As the appliance is used, the flow rate is registered by the increase flow rate registration unit. When the appliance is being used and its appliance flow rate is being registered, after a minute flow rate change which the flow rate change decision unit cannot decide as the flow rate change continues, a flow rate change is determined when the use of a certain appliance is stopped and the flow rate is deleted by the flow rate registration unit. When the registration number of the flow rates is one, the flow rate registration value is replaced and re-registered by the obtained average flow rate and it is possible to perform the monitoring at the usage time corresponding to the actual flow rate of the appliances. Thus, it is possible to avoid a case where the flow rate which is minutely changed is re-registered erroneously by considering as the appliance, and the usage time of the flow rate is monitored, and the usage time is shut off early, thereby increasing the number of unnecessary mobilization times of a gas provider or a case where an appliance such as a heater, which can be naturally used for a long time, is stopped in a short time, thereby having an adverse effect on convenience. Moreover, the safety is high.

### (First Embodiment)

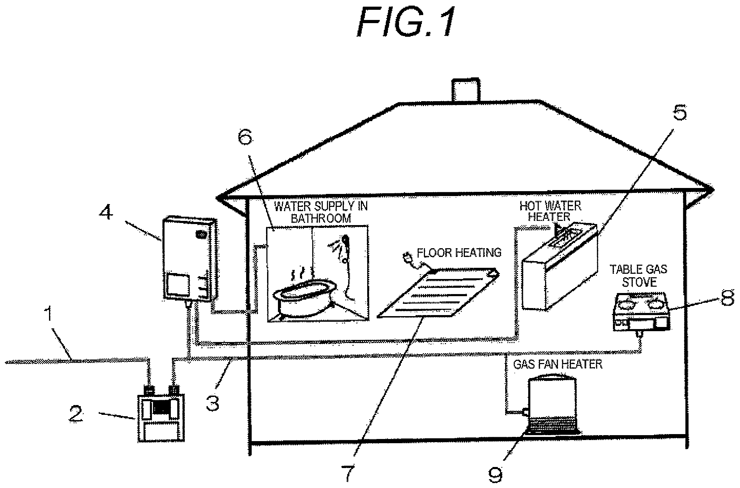

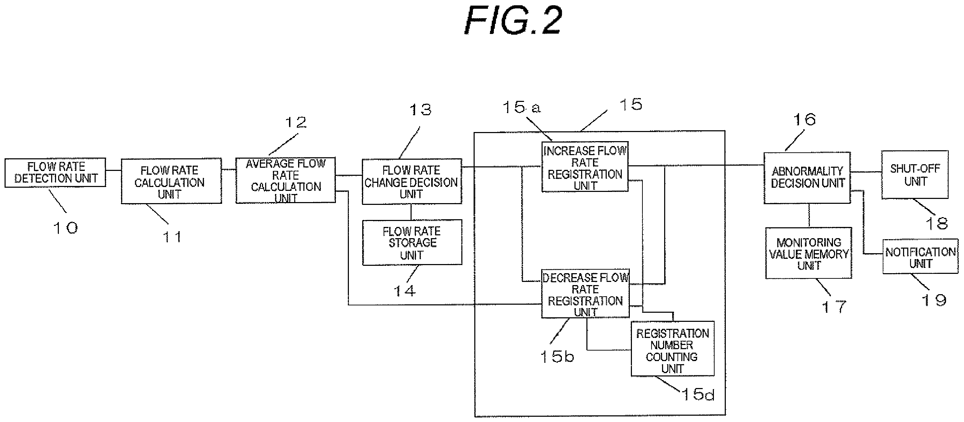

Fig. 1 is a schematic diagram that shows an installation form of a gas shut-off device according to a first embodiment of the present invention, and Fig. 2 is a control block diagram of the gas shut-off device.

A gas shut-off device 2 is installed in an inlet part of a gas supply pipe 1 of each home, and gas is supplied by branching pipes from a gas pipe 3 after passing through the gas shut-off device 2 and being piped to places where various gas appliances are installed. For example, a hot water heater 4 is installed outdoors, the hot water boiled by the hot water heater 4 is supplied to a hot water heater 5 of a kitchen, a bathroom 6 where a bathtub or a shower device is installed, and a floor heating 7 installed in a living room or the like via a water pipe, and various use shapes are formed.

Furthermore, in the room, the gas is supplied to a table gas stove 8 installed in the kitchen, and a gas fan heater 9 installed in the living room, a bedroom or the like and is suitably used as necessary.

Moreover, when the installed gas appliance is used and gas is consumed, the usage amount thereof is measured by the gas shut-off device 2, and the usage amount is accumulated and stored as a detection measurement value. The data stored in the gas shut-off device 2 is subjected to predetermined information processing based on a regular data request from a gas provider, and then the data is used by a user and a gas provider as information relating to a gas charge, a gas usage amount or a discount service provided by a gas provider, or the like.

Moreover, in the gas shut-off device 2, a gas flow path having a gas inlet and a gas outlet is formed, and a flow rate detection unit 10 detecting the gas flow rate is provided. In addition, as the flow rate detection unit 10, various types exist; there are one in which an ultrasonic signal is sent from one side to the other side by a pair of ultrasonic sensors installed in the flow path shown in the present embodiment, and the usage gas flow rate is detected from the propagation time thereof, one in which a heat wire type sensor is provided in the flow path and the flow rate is obtained from an impedance changed by a flow, or one in which the gas amount is detected by a diaphragm and a mechanical motion of the diaphragm is converted to an electric pulse signal by a magnet and lead switch or a magnetic resistance element to detect the flow rate.

The flow rate detection unit 10 using the ultrasonic sensor will be briefly described. A first transceiver, which transmits and receives an ultrasonic wave, and a second transceiver, which receives and transmits the ultrasonic wave, are disposed oppositely in a flow direction, and the switch-over of the transmission and reception is possible by a control circuit. The signals of the first transceiver and the second transceiver are processed and the flow rates thereof are measured, whereby the ultrasonic wave is transmitted from the upstream to the downstream. Moreover, the ultrasonic wave is received by the second transceiver and the propagation time is measured by a timer unit.

Next, the ultrasonic signal is transmitted from the downstream to the upstream by the switch-over unit and the propagation time is measured. Moreover, a flow rate value is obtained by the flow rate calculation unit 11 by multiplying a flow rate coefficient corresponding to the size of the flow path or the flow state of the fluid by a propagation time difference of the ultrasonic wave between the first transceiver and the second transceiver. The flow rate is obtained for each of preset periods as an instant flow rate value.

Moreover, the instant flow rate value measured and obtained for each period is input to an average flow rate calculation unit 12, and a predetermined number of instant flow rate values is gathered and calculated as an average flow rate value. The flow rate change decision unit 13 decides the presence or absence of a change in the flow rate of the appliance from the average flow rate value. The presence or absence decision of the change in the flow rate is performed using the current average flow rate and the prior average flow rate. Then, the current average flow rate value is stored in the flow rate storage unit 14 in a time scale manner. That is, in the flow rate change decision unit 13, the average flow rate value calculated by the average flow rate calculation unit 12 at this time is compared to the average flow rate N-times ago which is stored in the flow rate storage unit 14, it is determined whether or not there is a change of more than a preset flow rate, and it is determined whether or not there is a use start of the appliance or there is a flow rate change. For example, when a user uses a hot water heater 4, the flow rate value is changed from zero to a predetermined flow rate value, or when the hot water heater 4 or the like is used while other appliances are used, it is determined whether or not there is a use or stop of the appliance or whether there is a flow rate change based on whether or not the flow rate change rate or the flow rate change amount from the obtained average flow rate and the past flow rate storage value of the flow rate storage unit 14 are greater than or equal to a predetermined value.

Moreover, when the change in flow rate is detected by the flow rate change decision unit 13, it is decided that there is a use start of the appliance or a use stop of the appliance. Specifically, when the appliance is used, the flow rate change is set in the flow rate registration unit 15 as a registered flow rate value. Herein, the flow rate registration unit 15 includes an increase flow rate registration unit 15a, a decrease flow rate re-registration unit 15b, and a registration number counting unit 15d. Whenever an increased change in flow rate is detected, it is decided that an appliance is additionally used, and the flow rate change is newly set as the flow rate registration value on each occasion. Conversely, when the use of the appliance is stopped, it is decided that the appliance is stopped and the registered flow rate value close to the flow rate change among the registered flow rate values registered in the flow rate registration unit 15 is deleted from the flow rate registered values. Similarly, in the deletion processing, whenever a decreased change in flow rate is detected, it is detected that the use of the appliance is stopped, and the deletion processing of the registered flow rate value is carried out on each occasion.

Moreover, the abnormality decision unit 16 performs the monitoring of the use appliance by the set registered flow rate. The monitoring value memory unit 17 stores a limitation time value of the usage time corresponding to each flow rate region, a monitoring decision value of the using maximum flow rate or the like. For example, a total flow rate shut-off value for monitoring such a state where a pipe, which supplies the gas to a stove or the like, falls out due to a certain cause, an abnormally large flow rate is generated, and a limitation time of the usage time shut-off in which the limitation time of the usage time is defined to correspond to a case of being used to be far longer than the normal maximum usage time of the appliance, or the like are stored in the monitoring memory unit 17. By comparing and deciding the setting value and the registered flow rate value of the flow rate registration unit 15 using the abnormality decision unit 16, it is monitored whether or not the registered flow rate value does not exceed the usage maximum flow rate value, or the usage time of the appliance does not exceed the limitation time of the continuous use corresponding to the registered flow rate. The shut-off signal is transmitted to the shut-off unit 18 when the abnormality is decided by the abnormality decision unit 16 to stop the gas supply. Furthermore, the notification communication unit 19 displays the shut-off state or the shut-off contents on a liquid crystal display element or the like and notifies a center of the gas provider who performs a safety monitoring of the gas by communication such as a telephone line.

Next, the operation of the gas shut-off device 2 having such a configuration will be described. When the gas appliance in user's home such as the hot water heater 4, or the gas fan heater 9 is used, the flow rate thereof is detected by the flow rate detection unit 10. For example, in the case of using an ultrasonic sensor, the propagation time of the ultrasonic signal is measured as a detection value, the signal is sent to the flow rate calculation unit 11, converted as the instant flow rate value, and is calculated as an average flow rate value for each predetermined time by the average flow rate calculation unit 12. The obtained average flow rate is periodically subjected to determination of the presence or absence of the change in flow rate in the appliance by the flow rate change decision unit 13. In the flow rate storage unit 14, after the determination of the flow rate change, a plurality of average flow rates are stored in time series. It is determined whether or not the flow rate change appears from the past flow rates (for example, the flow rate memory value of the last time, the time before last, the time N times before or the like) stored in the flow rate storage unit 14 and the current average flow rate. That is, the use of the appliance or the stopping of use of the appliance is decided from the change state thereof using the average flow rate to be output at a predetermined interval, the flow rate change of the change time is set as the registered flow rate of the use appliance and is newly registered in the flow rate registration unit 15, or the registered flow rate, which has been already registered, is reduced and corrected, or is deleted, whereby it is possible to accurately set the registered flow rate corresponding to the use appliance at the time point of the change.

For example, when the hot water heater 4 is used, in a case where the past flow rate is zero, the flow rate is changed to 1500 L/h or the like, and it is determined whether or not the change appears by comparing the current average flow rate and the past average flow rate. When the change rate or the change amount is greater than or equal to a predetermined value, it is determined that the change appears, it is decided that a certain appliance is used, and it is registered in the flow rate registration unit 15. Otherwise, when the hot water heater 4 is used during the use of the table gas stove 8, the flow rate of the table gas stove 8 is stored in the past flow rates of the flow rate storage unit 14, and in the flow rate change decision unit 13, the change flow rate is obtained from the current average flow rate and a memory value of the past flow rate. And similarly, when the change rate from the current flow rate or the change flow rate is greater than or equal to a predetermined value, it is decided that the change exists and the change flow rate is registered in the flow rate registration unit 15. Herein, in the flow rate registration unit 15, the average flow rate obtained at the time when the flow rate change appears is input in the increase flow rate registration unit 15a and the decrease flow rate re-registration unit 15b. When the decision signal which indicates the flow rate increase is input by the flow rate change decision unit 13, the increase flow rate from the average flow rate of the last time is registered. Furthermore, while a plurality of appliances is used, any one of the appliances is stopped, or when the flow rate is changed, the flow rate change decision unit 13 decides whether the decrease change appears from a memory value of the past flow rate and the average flow rate, and outputs the decrease change flow rate. Then, the flow rate registration unit 15 deletes or reduces the nearest flow rate registration value to the decrease change flow rate among the registered flow rates. Then, the registration number of the registered flow rates and the registration number of the reduced flow rates are counted by the registration number counting unit 15d.

Regarding the use form of the hot water heater 4 during the use of the table gas stove 8 or the gas fan heater 9, the combustion amount is greatly changed in a case where the load is high in the initial operation and in a case where the load is low in the stable state when being used in the floor heating 7 or the like, or when the state where the initial difference between the water temperature and the setting temperature is high in the shower or the like becomes stable. In this case, the increase flow rates of the table gas stove 8 and the gas fan heater 9 are registered and also the flow rate of the hot water heater 4 is registered by the increase flow rate registration unit 15a of the flow rate registration unit 15. The flow rate change exists at the beginning of the operation of the hot water heater 4, and the use flow rate of the hot water heater 4, that is, the average flow rate value at this point of time is registered in the flow rate registration unit 15 as a registered flow rate. Moreover, when the operation is continued and the temperature is stable, the combustion amount, that is, the gas flow rate is controlled by being decreased by proportional control; however, the gas flow rate is gradually changed in some cases. In these cases, minute change which the flow rate change decision unit 13 cannot decide as existing of the change is continued for a long period. In this case, since the flow rate change does not exist, the registration value of the flow rate registration unit 15 is not changed. Then, when the hot water heater 4 is stopped, it is decided that the flow rate is in a decrease direction by the flow rate change decision unit 13, and the registered flow rate corresponding to the reduced flow rate is deleted by the decrease flow rate re-generation unit 15b. At this time, the registration number of the flow rates is counted. When the registration number is one, the registered flow rate is re-registered by replacing, as a new flow rate, with the average flow rate newly obtained due to the change in appliances. That is, regarding the flow rates of the table gas stove 8 and the gas fan heater 9, as a consequence of the flow rate decrease of the hot water heater 4 which is actually used, but the flow rate is not changed, it is prevented to erroneously decide that some appliance flow rate exists by finding that the registered flow rate value does not coincide with the decreased flow rate value, thereby newly registering the flow rate.

There is a case where the flow rate of one appliance which is not actually used is subject to the registered flow rate used when compared with the setting value of the monitoring value memory unit 17 in the abnormality decision unit 16, and the monitoring of the using appliances is performed by a registered value which has a greater value than the flow rate of the appliances which are actually used. However, it is prevented from monitoring by a continuous usage limitation time shorter than that by the flow rate of the appliances which are actually used, and the deterioration in the convenience that the shut-off unit 18 shuts off in an unexpected short time is prevented.

Moreover, the abnormality decision unit 16 monitors the use appliance with reference to the usage time limitation time in the monitoring memory unit 17 by the reset registered flow rate. When the monitoring time elapses and the abnormality is generated, the shut-off unit 18 is operated to stop the supply of the gas, whereby the safety is secured.

In addition, the numerical value used in the present embodiment is an example, and the use form is also not limited to the present embodiment.

As mentioned above, when the large flow rate change such as stopping of an appliance during use is detected from a state in which the flow rate change greater than a predetermined value is not being detected by the flow rate change decision unit 13, in a case where either of the plurality of registered flow rates is deleted and the registration number becomes one, by re-registering the obtained average flow rate value, the appliance flow rate during actual use can be monitored by the abnormality decision unit 16. The suitable use limitation function corresponding to the use appliance can be secured, an erroneous shut-off due to an erroneous usage time monitoring can be prevented, in the abnormal use of the appliance, the delayed shut-off or the early shut-off can be prevented, the safety and the reliability are extremely high, and an unnecessary mobilization of a gas supplier due to the early shut-off can be prevented, and the convenience is high.

The present application is based on Japanese Patent Application No. 2008-323688 filed on December 19, 2008, the contents of which are hereby incorporated by reference.

### Industrial Applicability

As mentioned above, the gas shut-off device according to the present invention suitably promotes the limitation function of the usage time of the appliance in which the usage amount is minutely changed, and can be applied to an overall appliance-monitoring apparatus such as a water supply meter or a digital electric power meter.

### Reference Signs List

10: flow rate detection unit
11: flow rate calculation unit
12: average flow rate calculation unit
13: flow rate change decision unit
14: flow rate storage unit
15: flow rate registration unit
16: abnormality decision unit
17: monitoring value memory unit
18: shut-off unit
19: notification communication unit

## Claims

1. A gas shut-off device that monitors usage states of a plurality of gas appliances and shuts off the supply of gas at the time of abnormality occurrence, the gas shut-off device comprising:
a flow rate detection unit (10) that is configured to measure a flow rate;
a flow rate calculation unit (11) that is configured to calculate values of instant flow rates from a detection value of the flow rate detection unit;
an average flow rate calculation unit (12) that is configured to obtain an average flow rate from the instant flow rates obtained by the flow rate calculation unit;
a flow rate change decision unit (13) that is configured to decide the presence or absence of a change in the flow rate of the gas appliances based on the average flow rate obtained by the average flow rate calculation unit;
a flow rate storage unit (14) that is configured to store a value of the average flow rate obtained after the decision of the presence of the change decided by the flow rate change decision unit;
an increase flow rate registration unit (15a) that is configured to register an amount of the flow rate change at the time of increase change decision by the flow rate change decision unit;
a decrease flow rate re-registration unit (15b) that is configured to reduce the registered flow rate near an amount of the flow rate change at the time of decrease change decision by the flow rate change decision unit, and re-register and replace it with a value of the average flow rate obtained by the average flow rate calculation unit after the reduction of the registered flow rate;
a monitoring value memory unit (17) that is configured to store a decision value for monitoring the usage states of the gas appliances;
an abnormality decision unit (16) that is configured to decide whether or not an abnormality exists from the registered flow rate of the increase flow rate registration unit and the decision value of the monitoring value memory unit;
a shut-off unit (18) that is configured to shut off the supply of gas when the abnormality established by the abnormality decision unit exists; and
a registration number counting unit (15d) that is configured to count a registration number of the registered flow rates, wherein
the decrease flow rate re-registration unit re-registers the average flow rate which is obtained by the average flow rate calculation unit as the registered flow rate when the registration number counted by the registration number counting unit is reduced to be one.

## Patentansprüche

1. Gasabsperreinrichtung, die Verwendungszustände von mehreren Gasvorrichtungen überwacht und die Gasversorgung zum Zeitpunkt des Auftretens einer Anomalie absperrt, wobei die Gasabsperreinrichtung Folgendes umfasst:
eine Durchflussmengendetektionseinheit (10), die konfiguriert ist, eine Durchflussmenge zu messen;
eine Durchflussmengenberechnungseinheit (11), die konfiguriert ist, Werte momentaner Durchflussmengen aus einem Detektionswert der Durchflussmengendetektionseinheit zu berechnen;
eine Berechnungseinheit (12) für eine durchschnittliche Durchflussmenge, die konfiguriert ist, eine durchschnittliche Durchflussmenge aus den momentanen Durchflussmengen, die von der Durchflussmengenberechnungseinheit erhalten wurden, zu erhalten;
eine Durchflussmengenänderungsentscheidungseinheit (13), die konfiguriert ist, auf der Grundlage der durchschnittlichen Durchflussmenge, die von der Berechnungseinheit für eine durchschnittliche Durchflussmenge erhalten wurde, über das Vorliegen oder das Fehlen einer Änderung der Durchflussmenge der Gasvorrichtungen zu entscheiden;
eine Durchflussmengenspeichereinheit (14), die konfiguriert ist, einen Wert der durchschnittlichen Durchflussmenge, der nach der Entscheidung über das Vorliegen der Änderung, die von der Durchflussmengenänderungsentscheidungseinheit getroffen wurde, erhalten wurde, zu speichern;
eine Durchflussmengenerhöhungsregistriereinheit (15a), die konfiguriert ist, einen Betrag der Durchflussmengenänderung zu dem Zeitpunkt einer Erhöhungsänderangsentscheidung durch die Durchflussmengenänderungsentscheidungseinheit zu registrieren;
eine Durchflussmengenverringerungsneuregistriereinheit (15b), die konfiguriert ist, die registrierte Durchflussmenge nahe einem Betrag der Durchflussmengenänderung zum Zeitpunkt der Verringerungsänderungsentscheidung durch die Durchflussmengenänderungsentscheidungseinheit zu verringern und sie neu zu registrieren und durch einen Wert der durchschnittlichen Durchflussmenge, der nach der Verringerung der registrierten Durchflussmenge durch die Berechnungseinheit für eine durchschnittliche Durchflussmenge erhalten wurde, zu ersetzen;
eine Überwachungswertspeichereinheit (17), die konfiguriert ist, einen Entscheidungswert zum Überwachen der Verwendungszustände der Gasvorrichtungen zu speichern;
eine Anomalie-Entscheidungseinheit (16), die konfiguriert ist, aus der von der Durchflussmengenerhöhungsregistriereinheit registrierten Durchflussmenge und dem Entscheidungswert der Überwachungswertspeichereinheit zu entscheiden, ob eine Anomalie vorliegt oder nicht;
eine Absperreinheit (18), die konfiguriert ist, die Gasversorgung abzuschalten, wenn die durch die Anomalie-Entscheidungseinheit ermittelte Anomalie existiert; und
eine Registrieranzahlzähleinheit (15d), die konfiguriert ist, eine Registrieranzahl der registrierten Durchflussmengen zu zählen, wobei
die Durchflussmengenverringerungsneuregistriereinheit die durchschnittliche Durchflussmenge, die von der Berechnungseinheit für eine durchschnittliche Durchflussmenge als die registrierte Durchflussmenge erhalten wird, neu registriert, wenn die von der Registrieranzahlzähleinheit gezählte Registrieranzahl auf eins reduziert ist.

## Revendications

1. Dispositif de coupure de gaz qui surveille des états d'utilisation d'une pluralité d'appareils à gaz et coupe l'alimentation en gaz lors de la survenue d'une anomalie, le dispositif de coupure de gaz comportant :
une unité de détection de débit (10) qui est configurée pour mesurer un débit ;
une unité de calcul de débit (11) qui est configurée pour calculer des valeurs de débits instantanés à partir d'une valeur de détection de l'unité de détection de débit ;
une unité de calcul de débit moyen (12) qui est configurée pour obtenir un débit moyen à partir des débits instantanés obtenus par l'unité de calcul de débit ;
une unité de détermination de changement de débit (13) qui es configurée pour déterminer la présence ou l'absence d'un changement de débit des appareils à gaz en se fondant sur le débit moyen obtenu par l'unité de calcul de débit moyen ;
une unité de stockage de débit (14) qui est configurée pour stocker une valeur du débit moyen obtenue après la détermination de la présence d'un changement par l'unité de détermination de changement de débit ;
une unité d'enregistrement d'augmentation de débit (15a) qui est configurée pour enregistrer une quantité de changement de débit lorsque l'unité de détermination de changement de débit détermine la présence d'une augmentation ;
une unité de réenregistrement d'une diminution de débit (15b) qui est configurée pour réduire le débit enregistré d'une quantité de changement de débit lorsque l'unité de décision de changement de débit détermine la présence d'une réduction, et pour le réenregistrer et le remplacer par une valeur du débit moyen obtenue par l'unité de calcul de débit moyen après la réduction du débit enregistré ;
une unité de mémoire de valeur de surveillance (17) qui est configurée pour stocker une valeur de détermination pour surveiller les états d'utilisation des appareils à gaz ;
une unité de détermination d'anomalie (16) qui est configurée pour déterminer s'il y a une anomalie à partir du débit enregistré par l'unité d'enregistrement d'augmentation de débit et de la valeur de détermination de l'unité de mémoire de valeur de surveillance ;
une unité de coupure (18) qui est configurée pour couper l'alimentation en gaz en présence d'une anomalie déterminée par l'unité de détermination d'anomalie ; et
une unité de comptage de nombre d'enregistrements (15d) qui est configurée pour compter un nombre d'enregistrements de débits enregistrés, dans lequel
l'unité de réenregistrement de diminution de débit réenregistre le débit moyen qui est obtenu par l'unité de calcul de débit moyen en tant que débit enregistré quand le nombre d'enregistrement compté par l'unité de comptage de nombre d'enregistrements est réduit à un.
